# EUROPEAN PATENT APPLICATION

(11) **EP 4 231 735 A1**
(43) Date of publication of application: **23.08.2023**
(21) Application number: 21880428.4
(22) Date of filing: 08.10.2021
(51) Int. Cl.: H04W 72/02, H04W 72/04, H04L 1/18, H04W 92/18

(54) **METHOD AND APPARATUS FOR SENSING AND SELECTION OF RESOURCE IN SIDELINK COMMUNICATION**

(30) Priority: 15.10.2020 US 202063092028 P
(71) Applicant: HYUNDAI MOTOR COMPANY, Seoul 06797 (KR); Kia Corporation, Seocho-gu Seoul 06797 (KR); Wonkwang University Center for Industry - Academy Cooperation, Iksan-si, Jeollabuk-do 54538 (KR)
(72) Inventor: HAHN, Gene Back, Hwaseong-si, Gyeonggi-do 18280 (KR); JUNG, In Yong, Hwaseong-si, Gyeonggi-do 18280 (KR); SON, Hyuk Min, Iksan-si, Jeollabuk-do 54653 (KR)
(74) Representative: Viering, Jentschura & Partner mbB Patent- und Rechtsanwälte
(86) International application number: PCT/KR2021/013918
(87) International publication number: WO 2022/080781

(57) **Abstract**

Disclosed are a method and apparatus for sensing and selection of a resource in sidelink communication. A method for operation of a transmission terminal comprises the steps of: identifying the congestion level in one or more measurement areas; when the congestion level is greater than or equal to a first reference value, selecting a first sensing window from among a plurality of sensing windows; performing a sensing operation within the first sensing window; and performing sidelink communication with a reception terminal, on the basis of the result of the sensing operation.

## Description

### [Technical Field]

The present disclosure relates to a sidelink communication technique, and more particularly, to a technique for sensing window configuration and resource selection.

### [Background Art]

A fifth-generation (5G) communication system (e.g., New Radio (NR) communication system) which uses a frequency band higher than a frequency band of a fourth-generation (4G) communication system (e.g., Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g., C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g., C-V2X communications) may be performed based on sidelink communication technologies (e.g., Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g., periodic sidelink data) may be transmitted using the CG resources.

Meanwhile, a terminal may select a sidelink resource by performing a partial sensing operation or a random selection operation, and may perform sidelink communication using the selected sidelink resource. As the number of times (or execution range) that the partial sensing operation or the random selection operation is performed increases, a collision probability in sidelink communication may decrease. That is, transmission performance of sidelink data can be improved. On the other hand, as the number of times (or execution range) that the partial sensing operation or the random selection operation is performed increases, power consumption in the terminal may increase. That is, a relationship between the collision probability and the power consumption may be a tradeoff relationship. In sidelink communication, methods for satisfying both reduction in collision probability and reduction in power consumption are required.

### [Disclosure]

### [Technical Problem]

The present disclosure is directed to providing a method and an apparatus for resource sensing and selection in sidelink communication.

### [Technical Solution]

An operation method of a transmitting terminal, according to a first exemplary embodiment of the present disclosure for achieving the above-described objective, may comprise: identifying a congestion level in one or more measurement regions; selecting a first sensing window from among a plurality of sensing windows, when the congestion level is greater than or equal to a first reference value; performing a sensing operation within the first sensing window; and performing sidelink communication with a receiving terminal based on a result of the sensing operation, wherein a size of the first sensing window is different from a size of a second sensing window selected from among the plurality of sensing windows when the congestion level is less than the first reference value.

The operation method may further comprise receiving, from a base station, a message including mapping relationship information between congestion levels and the plurality of sensing windows, wherein each of the first sensing window and the second sensing window is selected based on the mapping relationship information.

The message may further include mapping relationship information between congestion levels and a plurality of periods, wherein the plurality of periods are associated with the plurality of sensing windows.

The operation method may further comprise selecting a first period associated with the first sensing window from among the plurality of periods, wherein the sensing operation is performed within the first sensing window according to the first period.

The congestion level may be determined based on a ratio between the one or more measurement regions and at least one measurement region determined to be congested among the one or more measurement regions.

A degree of congestion when the congestion level is equal to or greater than the first reference value may be higher than a degree of congestion when the congestion level is less than the first reference value, and the size of the first sensing window may be larger than the size of the second sensing window.

The operation method may further comprise receiving, from a base station, configuration information of the one or more measurement regions and configuration information of the plurality of sensing windows.

When start times of the plurality of sensing windows are same, the configuration information of the plurality of sensing windows may include information on a common start time and information on individual end times.

The operation method may further comprise, when an available resource detected by the sensing operation is located before an end time of a third sensing window among the plurality of sensing windows, changing the first sensing window to the third sensing window, wherein a size of the third sensing window may be smaller than the size of the first sensing window.

The changing to the third sensing window may be performed when a preconfigured condition is satisfied, and the preconfigured condition may be at least one of a case when data transmission associated with a high priority is required, a case when aperiodic data transmission is required, a case when data retransmission is required, or combinations thereof.

An operation method of a transmitting terminal, according to a second exemplary embodiment of the present disclosure for achieving the above-described objective, may comprise: performing a first sidelink communication procedure with a receiving terminal based on a result of a sensing operation within a sensing window #n among a plurality of sensing windows; changing a sensing window from the sensing window #n to a sensing window #k based on one or more hybrid automatic repeat request (HARQ) responses received in the first sidelink communication procedure; and performing a second sidelink communication procedure with the receiving terminal based on a result of a sensing operation within the sensing window #k among the plurality of sensing windows, wherein a size of the sensing window #n is different from a size of the sensing window #k, and each of n and k is a natural number.

When the one or more HARQ responses are p consecutive acknowledgments (ACKs), a sensing window used for the second sidelink communication procedure may be determined as the sensing window #k smaller than the sensing window #n, and p is natural number.

When the one or more HARQ responses are j consecutive negative ACKs (NACKs), a sensing window used for the second sidelink communication procedure may be determined as the sensing window #k greater than the sensing window #n, and the j is a natural number.

The operation method may further comprise receiving, from a base station, a message including mapping relationship information between the one or more HARQ responses and the plurality of sensing windows, wherein the sensing window #k is determined based on the mapping relationship information.

The message may further include mapping relationship information between the one or more HARQ responses and a plurality of periods, the plurality of periods are associated with the plurality of sensing windows, and the sensing window #k is configured according to a period #k among the plurality of periods.

An operation method of a transmitting terminal, according to a third exemplary embodiment of the present disclosure for achieving the above-described objective, may comprise: selecting a first sensing window mapped to a first data type from among a plurality of sensing windows; performing a sensing operation within the first sensing window; and transmitting data having the first data type to a receiving terminal based on a result of the sensing operation, wherein a size of the first sensing window is different from a size of a second sensing window mapped to a second data type among the plurality of sensing windows.

The operation method may further comprise receiving, from a base station, a message including mapping relationship information between a plurality of data types including the first data type and the second data type and the plurality of sensing windows, wherein the first sensing window is determined based on the mapping relationship information.

The message may further include mapping relationship information between the plurality of data types and a plurality of periods, the plurality of periods are associated with the plurality of sensing windows, and the sensing operation may be performed within the first sensing window according to a first period among the plurality of periods.

When the first data type is periodic data, the second data type may be aperiodic data, and when the first data type is aperiodic data, the second data type may be periodic data.

The operation method may further comprise, when an available resource detected by the sensing operation is located before an end time of a third sensing window among the plurality of sensing windows, changing the first sensing window to the third sensing window, wherein a size of the third sensing window is smaller than the size of the first sensing window.

### [Advantageous Effects]

According to the present disclosure, a sensing window may be selected based on a congestion state, a retransmission state, or a data type. For example, as a congestion level increases, a sensing window having a larger size may be selected, and according to this operation, a probability of resource selection collision between transmitting terminals can be reduced. As a congestion level is lower, a sensing window having a smaller size may be selected, and according to this operation, the efficiency of resource use can be improved.

### [Description of Drawings]

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a UE performing sidelink communication.
FIG. 5 is a block diagram illustrating a first exemplary embodiment of a control plane protocol stack of a UE performing sidelink communication.
FIG. 6 is a block diagram illustrating a second exemplary embodiment of a control plane protocol stack of a UE performing sidelink communication.
FIG. 7 is a sequence chart illustrating a first exemplary embodiment of a method for determining a sensing window based on a congestion state.
FIG. 8 is a conceptual diagram illustrating a first exemplary embodiment of measurement region(s).
FIG. 9 is a conceptual diagram illustrating a first exemplary embodiment of sensing windows.
FIG. 10 is a conceptual diagram illustrating a second exemplary embodiment of sensing windows.
FIG. 11 is a conceptual diagram illustrating a third exemplary embodiment of sensing windows.
FIG. 12 is a conceptual diagram illustrating a fourth exemplary embodiment of sensing windows.
FIG. 13 is a sequence chart illustrating a first exemplary embodiment of a method of determining a sensing window based on a data type.
FIG. 14 is a sequence chart illustrating a first exemplary embodiment of a method of determining a sensing window based on a retransmission state.
FIG. 15 is a conceptual diagram illustrating a first exemplary embodiment of a method of changing a sensing window.
FIG. 16 is a conceptual diagram illustrating a second exemplary embodiment of a method of changing a sensing window.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

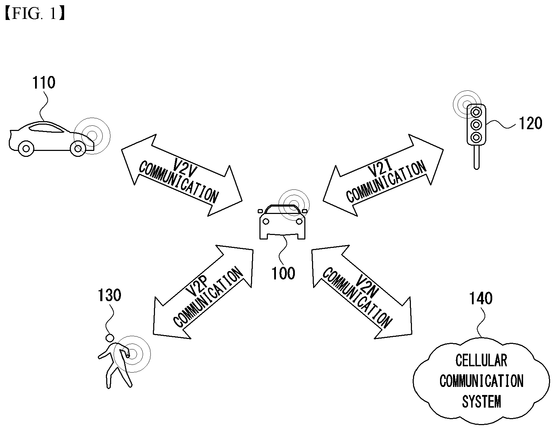

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g., a cellular communication system 140), and the V2X communications supported by the cellular communication system 140 may be referred to as "Cellular-V2X (C-V2X) communications." Here, the cellular communication system 140 may include the 4G communication system (e.g., LTE communication system or LTE-A communication system), the 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported in the cellular communication system 140 may be performed based on "sidelink" communication technologies (e.g., ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g., the communication node located in the vehicle 100) and an infrastructure (e.g., road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g., ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g., the communication node located in the vehicle 100) and a server connected through the cellular communication system 140. The V2N communications may be performed based on the 4G communication technology (e.g., LTE or LTE-A) or the 5G communication technology (e.g., NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

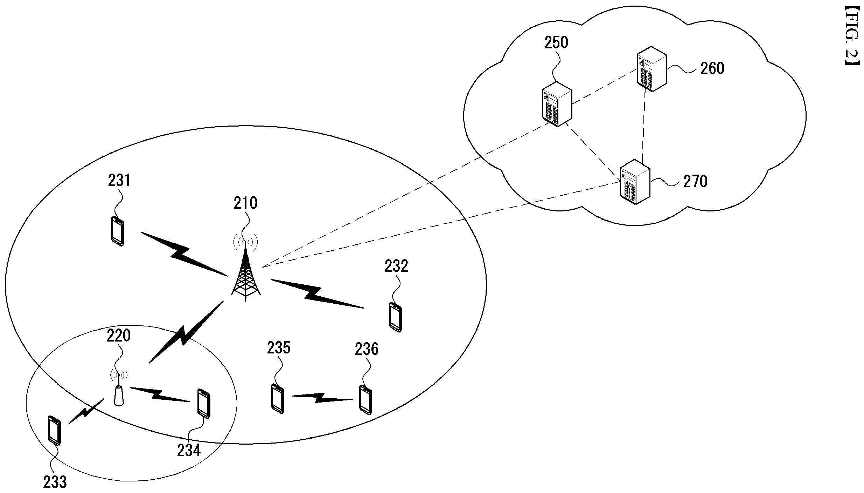

FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slice configured in the core network.

The communication nodes (e.g., base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) comprising the cellular communication system may be configured as follows.

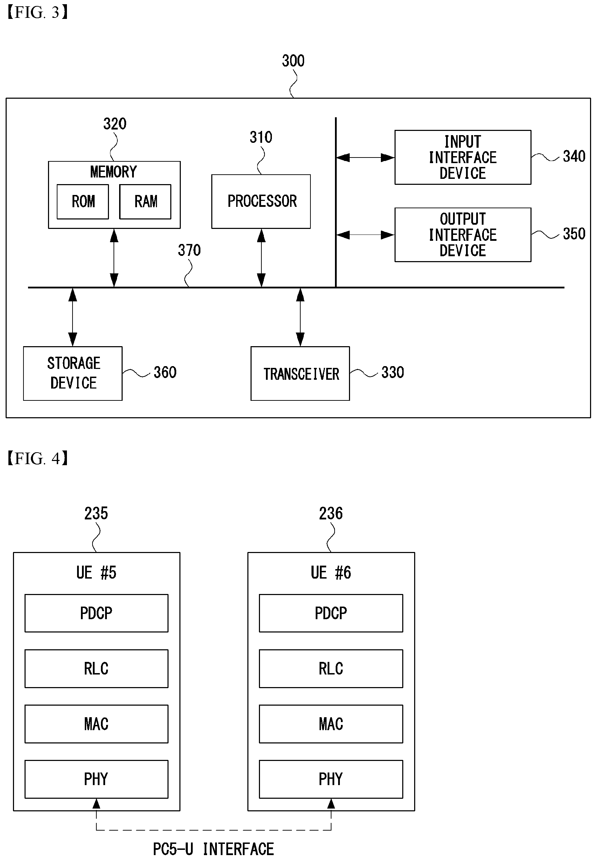

FIG. 3 is a conceptual diagram illustrating an exemplary embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

FIG. 4 is a block diagram illustrating an exemplary embodiment of a user plane protocol stack of a UE performing sidelink communication.

As shown in FIG. 4, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications (e.g., V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

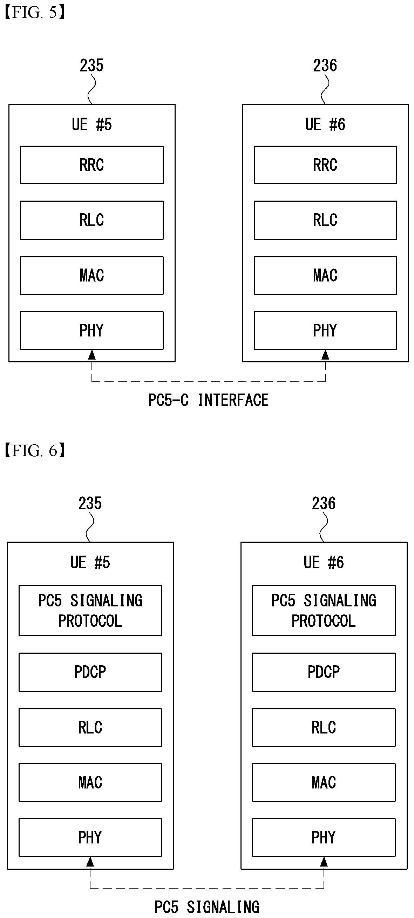

FIG. 5 is a block diagram illustrating a first exemplary embodiment of a control plane protocol stack of a UE performing sidelink communication, and FIG. 6 is a block diagram illustrating a second exemplary embodiment of a control plane protocol stack of a UE performing sidelink communication.

As shown in FIGS. 5 and 6, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g., Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by a higher layer signaling. The PSCCH may be used for transmitting and receiving sidelink control information (SCI) and may also be configured in the UE (e.g., UE 235 or 236) by a higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for higher layer signaling may be referred to as a `higher layer message' or `higher layer signaling message'. A message used for MAC signaling may be referred to as a `MAC message' or `MAC signaling message'. A message used for PHY signaling may be referred to as a `PHY message' or `PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as `first-stage SCI', and the 2nd-stage SCI may be referred to as 'second-stage SCI'. A format of the first-stage SCI may include a SCI format 1-A, and a format of the second-stage SCI may include a SCI format 2-A and a SCI format 2-B.

The 1st-stage SCI may include or more information elements among priority information, frequency resource assignment information, time resource assignment information, resource reservation period information, demodulation reference signal (DMRS) pattern information, 2nd-stage SCI format information, a beta_offset indicator, the number of DMRS ports, and modulation and coding scheme (MCS) information. The 2nd-stage SCI may include one or more information elements among a HARQ processor identifier (ID), a redundancy version (RV), a source ID, a destination ID, CSI request information, a zone ID, and communication range requirements.

A transmitting terminal may select a sidelink (SL) resource by performing a sensing operation (e.g., partial sensing operation) or a random selection operation, and may transmit SL data using the selected SL resource. In exemplary embodiments, a transmitting terminal may be a terminal transmitting SL data, and a receiving terminal may be a terminal receiving the SL data. In addition, in exemplary embodiments, a resource selection operation may mean a sensing operation and/or a random selection operation.

The transmitting terminal may identify available resources by performing a sensing operation on time and/or frequency resources within a sensing window. For reduction of a probability that a plurality of transmitting terminals select the same SL resource (e.g., resource collision probability) and/or for improvement of an SL resource use efficiency, the size and/or location (e.g., location in the time domain and/or frequency domain) of the sensing window may vary based on at least one of a congestion state, a data type, or a retransmission state.

### -Method 1: Method for determining a sensing window based on a congestion state

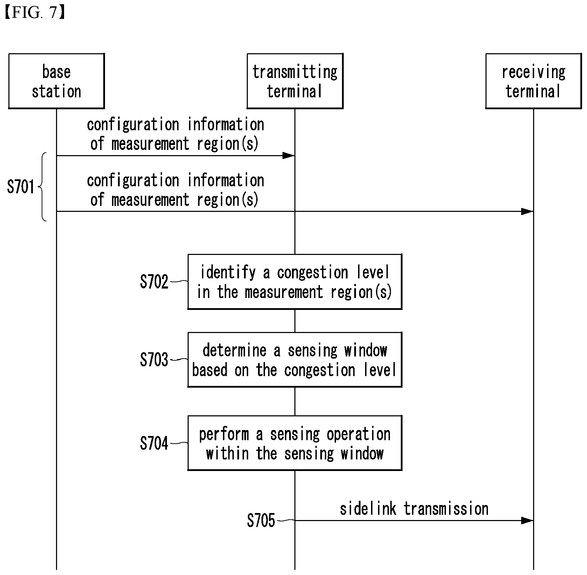

FIG. 7 is a sequence chart illustrating a first exemplary embodiment of a method for determining a sensing window based on a congestion state.

As shown in FIG. 7, a communication system may include a base station, a transmitting terminal, and a receiving terminal. The base station may be the base station 210 or the relay 220 shown in FIG. 2, the transmitting terminal may be the UE 235 shown in FIG. 2, and the receiving terminal may be the UE 236 shown in FIG. 2. Each of the base station, the transmitting terminal, and the receiving terminal may be configured identically or similarly to the communication node 300 shown in FIG. 3. Each of the transmitting terminal and the receiving terminal may support the protocol stacks shown in FIGS. 4 to 6.

The base station may configure measurement region(s) within an SL resource region (e.g., resource pool), and may transmit configuration information of the measurement region(s) to the transmitting terminal and/or the receiving terminal (S701). The configuration information of the measurement region(s) may be transmitted using at least one of system information, radio resource control (RRC) message, medium access control (MAC) control element (CE), or control information (e.g., downlink control information (DCI)). Alternatively, the measurement region(s) may be defined in technical specifications. In this case, since the transmitting terminal and the receiving terminal know the measurement region(s), step S701 may be omitted. The measurement region(s) may refer to resource region(s) in which a measurement operation of a congestion state (e.g., congestion degree, congestion level, or the like) is performed. The measurement region(s) may be configured as follows.

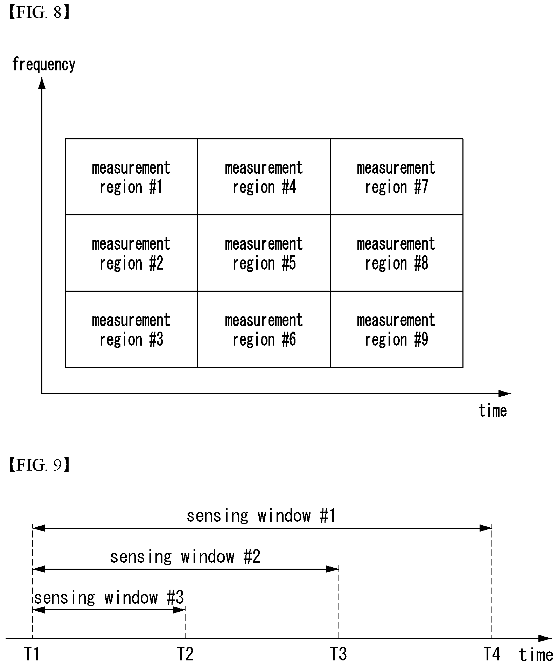

FIG. 8 is a conceptual diagram illustrating a first exemplary embodiment of measurement region(s).

As shown in FIG. 8, the base station may configure 9 measurement regions (e.g., measurement regions #1 to #9) within the SL resource region. One SL resource region may include one or more resource pools. One SL resource region (e.g., the entire SL resource region) may be divided into 9 measurement regions. The measurement operation of the congestion stage may be performed in one or more measurement regions. For example, a communication node (e.g., base station, transmitting terminal, and/or receiving terminal) may perform a monitoring operation for receiving a signal (e.g., reference signal and/or synchronization signal) in one or more measurement regions, measure a quality of the received signal, and estimate the congestion state based on the measured quality. In the frequency domain, one measurement region may be configured in units of subcarriers, resource blocks (RBs), or sub-channels. In the time domain, one measurement region may be configured in units of symbols, mini-slots, slots, or subframes. One measurement region may include one or more resource pools.

Referring again to FIG. 7, the configuration information of the measurement region(s) may include one or more information elements defined in Table 3 below.

**[Table 3]**

| | **Information elements** |
|---|---|
| Time resource information | -The length of measurement region (e.g., the number of symbols, mini-slots, slots, or subframes included in the measurement region in the time domain) |
| | -The number of measurement regions configured in the time domain (e.g., 3 in the exemplary embodiment of FIG. 8) |
| | -Start time of the first measurement region in the time domain (e.g., symbol index or slot index) |
| | -End time of the last measurement region in the time domain (e.g., symbol index or slot index) |
| Frequency resource information | The size of measurement region (e.g., the number of subcarriers, RBs, or sub-channels included in the measurement region in the frequency domain) |
| | -The number of measurement regions configured in the frequency domain (e.g., 3 in the exemplary embodiment of FIG. 8) |
| | -Start point of the first measurement region in the frequency domain (e.g., subcarrier index or RB index) |
| | -End point of the last measurement region in the frequency domain (e.g., subcarrier index or RB index) |
| Resource pool information | -Resource pool index (e.g., index of a resource pool in which measurement region(s) are configured) |
| | -The number of measurement regions configured in a resource pool |
| Measurement threshold | -Reference signal received power (RSRP) threshold or range |
| | -Reference signal received quality (RSRQ) threshold or range |
| | -Received signal strength indicator (RSSI) threshold or range |
| | -Channel busy ratio (CBR) threshold or range |
| | -Signal to interference plus noise ratio (SINR) threshold or range |

The transmitting terminal may identify the measurement region(s) based on the configuration information received from the base station. Alternatively, the transmitting terminal may identify the measurement region(s) defined in technical specifications. The transmitting terminal may identify a congestion state (e.g., congestion degree, congestion level) of the measurement region(s) (S702). For example, the transmitting terminal may identify the congestion state of the measurement region(s) by performing a congestion measurement operation. The transmitting terminal may measure an RSRP, RSRQ, RSSI, CBR, and/or SINR for signal(s) (e.g., reference signals and/or synchronization signals) in each of the measurement region(s). The transmitting terminal may determine (or identify) that the corresponding measurement region is congested when a measurement result is equal to or greater than a measurement threshold defined in Table 3 or when a measurement result is less than a measurement threshold defined in Table 3. In addition, the transmitting terminal may determine (or identify) a congestion state for the SL resource region (e.g., the entire SL resource region). For example, the SL resource region may include 9 measurement regions, and 3 measurement regions among the 9 measurement regions may be determined to be in a congested state. In this case, the transmitting terminal may determine a degree of congestion (or congestion level) of the SL resource region as 33%.

Alternatively, the congestion state for the measurement region(s) may be measured by another communication node (e.g., base station or another terminal) instead of the transmitting terminal. In this case, another communication node may transmit information on the measured congestion state to the transmitting terminal, and the transmitting terminal may identify the congestion state for the measurement region(s) based on the information received from the another communication node. Another terminal performing the congestion measurement operation may be a group leader of a group to which the transmitting terminal belongs.

The transmitting terminal may determine (or select or configure) a sensing window based on the congestion state (e.g., congestion degree or congestion level) (S703). The sensing window may be a resource region in which a partial sensing operation and/or a full sensing operation is performed. The sensing window may be configured independently of the measurement region(s) shown in FIG. 8. Alternatively, the sensing window may be configured identically to the measurement region(s) shown in FIG. 8. The sensing window may be configured to include one or more measurement regions shown in FIG. 8. A plurality of sensing windows may be configured. The plurality of sensing windows may be resource regions orthogonal to each other. Alternatively, the plurality of sensing windows may partially overlap or fully overlap. The plurality of sensing windows may be configured by the base station, and the base station may transmit configuration information of the plurality of sensing windows using at least one of system information, RRC message, MAC CE, or control information. The transmitting terminal may receive the configuration information of the plurality of sensing windows from the base station, and may determine one sensing window based on the congestion state among the plurality of sensing windows. The sensing windows may be configured as follows.

FIG. 9 is a conceptual diagram illustrating a first exemplary embodiment of sensing windows.

As shown in FIG. 9, sensing windows #1 to #3 may be configure. Frequency resources of the sensing windows #1 to #3 may be the same, and time resources of the sensing windows #1 to #3 may be different. The sensing windows #1 to #3 may overlap each other. The sensing window #3 may belong to the sensing window #2, and the sensing window #2 may belong to the sensing window #1. Alternatively, some resource regions in the sensing windows #1 to #3 may overlap each other. In the time domain, start times (e.g., T1) of the sensing windows #1 to #3 may be the same, and end times (e.g., T2, T3, and T4) of the sensing windows #1 to #3 may be different from each other. T2 may be the end time of the sensing window #3, T3 may be the end time of the sensing window #2, and T4 may be the end time of the sensing window #1. When the sensing windows #1 to #3 shown in FIG. 9 are configured, the base station may transmit configuration information including one or more information elements defined in Table 4 below using at least one of system information, RRC message, MAC CE, or control information. This operation may be performed in step S710, before step S701, or after step S701. The end times of the sensing windows #1 to #3 in Table 4 may be different from each other. That is, Table 4 may be interpreted as including information on a common start time of the plurality of sensing windows and information on individual end times of the plurality of sensing windows.

**[Table 4]**

| | **Information elements** |
|---|---|
| Common start time | T1 |
| End time of sensing window #1 | T4 and/or the length of [T4-T1] |
| End time of sensing window #2 | T3 and/or the length of [T3-T1] |
| End time of sensing window #3 | T2 and/or the length of [T2-T1] |

Each of T1, T2, T3, and T4 may be represented by a time resource index (e.g., symbol index, mini-slot index, slot index, or subframe index). As in the exemplary embodiment shown in FIG. 8, the SL resource region may be divided into a plurality of measurement regions, and each of the sensing windows #1 to #3 may be indicated by index(es) of measurement region(s). Each of T2, T3, and T4 may be configured as an offset. For example, T2 may be configured as an offset with respect to T1, T3 may be configured as an offset with respect to T2, and T4 may be configured as an offset with respect to T3. When the offset between T2 and T1 is 4 slots, the sensing window #3 may be configured as a period comprising 4 slots from T1. When the offset between T3 and T2 is 3 slots, the sensing window #2 may be configured as a period comprising 7 slots from T1. When the offset between T4 and T3 is 2 slots, the sensing window #1 may be configured as a period comprising 9 slots from T1.

Alternatively, each of T2, T3, and T4 may be configured as an offset with respect to T1. When the offset between T2 and T1 is 4 slots, the sensing window #3 may be configured as a period comprising 4 slots from T1. When the offset between T3 and T1 is 7 slots, the sensing window #2 may be configured as a period comprising 7 slots from T1. When the offset between T4 and T1 is 9 slots, the sensing window #1 may be configured as a period comprising 9 slots from T1.

Unlike the exemplary embodiment shown in FIG. 9, in the time domain, start times of the sensing windows #1 to #3 may be configured differently, and the end times of the sensing windows #1 to #3 may be configured to be the same.

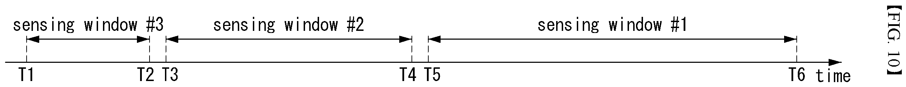

FIG. 10 is a conceptual diagram illustrating a second exemplary embodiment of sensing windows.

As shown in FIG. 10, sensing windows #1 to #3 may be configured. Frequency resources of the sensing windows #1 to #3 may be the same, and time resources of the sensing windows #1 to #3 may be different. The sensing windows #1 to #3 may not overlap each other. That is, the sensing windows #1 to #3 may be orthogonal. A start time of the sensing window #3 may be T1, and an end time of the sensing window #3 may be T2. A start time of the sensing window #2 may be T3, and an end time of the sensing window #2 may be T4. A start time of the sensing window #1 may be T5, and an end time of the sensing window #1 may be T6. Similarly to the exemplary embodiment described with reference to FIG. 9, each of T1 to T6 may be configured as an offset. For example, Tn may be configured as an offset with respect to Tn-1. Here, n may be a natural number greater than or equal to 2.

Alternatively, the offset of each of T2 to T6 may be configured with respect to T1. Each of T1 to T6 may be represented by a time resource index (e.g., symbol index, mini-slot index, slot index, or subframe index). The base station may transmit configuration information including one or more information elements defined in Table 5 below using at least one of system information, RRC message, MAC CE, or control information. This operation may be performed in step S701, before step S701, or after step S701.

**[Table 5]**

| | **Information elements** |
|---|---|
| Configuration information of sensing window #1 | T5, T6, and/or the length of [T6-T5] |
| Configuration information of sensing window #2 | T3, T4, and/or the length of [T4-T3] |
| Configuration information of sensing window #3 | T1, T2, and/or the length of [T2-T1] |

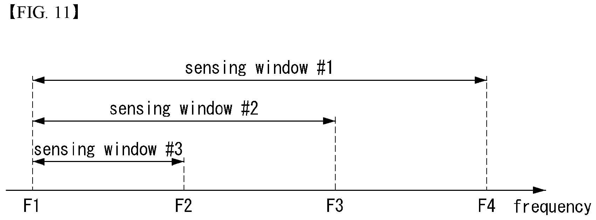

FIG. 11 is a conceptual diagram illustrating a third exemplary embodiment of sensing windows.

As shown in FIG. 11, sensing windows #1 to #3 may be configured. Time resources of the sensing windows #1 to #3 may be the same, and frequency resources of the sensing windows #1 to #3 may be different. The sensing windows #1 to #3 may overlap each other. The sensing window #3 may belong to the sensing window #2, and the sensing window #2 may belong to the sensing window #1. Alternatively, some resource regions of the sensing windows #1 to #3 may overlap each other. In the frequency domain, start locations (e.g., F1) of the sensing windows #1 to #3 may be the same, and ending locations (e.g., F2, F3, and F4) of the sensing windows #1 to #3 may be different from each other.

F2 may be the end location of the sensing window #3, F3 may be the end location of the sensing window #2, and F4 may be the end location of the sensing window #1. When the sensing windows #1 to #3 shown in FIG. 11 are configured, the base station may transmit configuration information including one or more information elements defined in Table 6 below using at least one of system information, RRC message, MAC CE, or control information. This operation may be performed in step S701, before step S701, or after step S701. The end locations of the sensing windows #1 to #3 in Table 6 may be different from each other. That is, Table 6 may be interpreted as including information on a common start location of the plurality of sensing windows and information on individual end locations of the plurality of sensing windows.

**[Table 6]**

| | **Information elements** |
|---|---|
| Common start location | F1 |
| End location of sensing window #1 | F4 and/or the size of [F4-F1] |
| End location of sensing window #2 | F3 and/or the size of [F3-F1] |
| End location of sensing window #3 | F2 and/or the size of [F2-F1] |

Each of F1, F2, F3, and F4 may be represented by a frequency resource index (e.g., subcarrier index, resource block (RB) index, or sub-channel index). As in the exemplary embodiment shown in FIG. 8, the SL resource region may be divided into a plurality of measurement regions, and each of the sensing windows #1 to #3 may be indicated by index(es) of measurement region(s). Each of F2, F3, and F4 may be configured as an offset. For example, F2 may be configured as an offset with respect to F1, F3 may be configured as an offset with respect to F2, and F4 may be configured as an offset with respect to F3. When the offset between F2 and F1 is 4 sub-channels, the sensing window #3 may be configured as a region comprising 4 sub-channels from F1. When the offset between F3 and F2 is 3 sub-channels, the sensing window #2 may be configured as a region comprising 7 sub-channels from F1. When the offset between F4 and F3 is 2 sub-channels, the sensing window #1 may be configured as a region comprising 9 sub-channels from F1.

Alternatively, each of F2, F3, and F4 may be configured as an offset with respect to F1. When the offset between F2 and F1 is 4 sub-channels, the sensing window #3 may be configured as a region comprising 4 sub-channels from F1. When the offset between F3 and F1 is 7 subchannels, the sensing window #2 may be configured as a region comprising 7 sub-channels from F1. When the offset between F4 and F1 is 9 sub-channels, the sensing window #1 may be configured as a region comprising 9 sub-channels from F1.

The sensing windows #1 to #3 may be configured by a combination of the exemplary embodiment shown in FIG. 11 and the exemplary embodiment shown in FIG. 9. In this case, the sensing window #1 may be configured with time resources from T1 to T4 and frequency resources from F1 to F4, the sensing window #2 may be configured with time resources from T1 to T3 and frequency resources from F1 to F3, and the sensing window #3 may be configured with time resources from T1 to T2 and frequency resources from F1 to F2.

Unlike the exemplary embodiment shown in FIG. 11, in the frequency domain, the start locations of the sensing windows #1 to #3 may be configured differently, and the end locations of the sensing windows #1 to #3 may be configured to be the same.

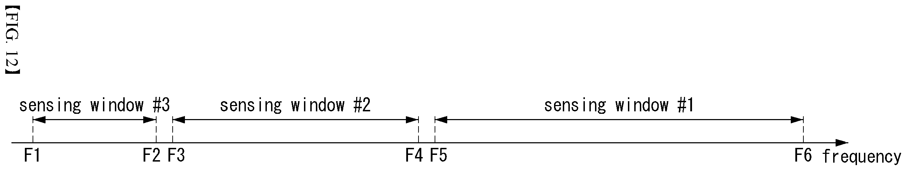

FIG. 12 is a conceptual diagram illustrating a fourth exemplary embodiment of sensing windows.

As shown in FIG. 12, sensing windows #1 to #3 may be configured. Time resources of the sensing windows #1 to #3 may be the same, and frequency resources of the sensing windows #1 to #3 may be different. The sensing windows #1 to #3 may not overlap each other. That is, the sensing windows #1 to #3 may be orthogonal. A start location of the sensing window #3 may be F1, and an end location of the sensing window #3 may be F2. A start location of the sensing window #2 may be F3, and an end location of the sensing window #2 may be F4. A start location of the sensing window #1 may be F5, and an end location of the sensing window #1 may be F6. Similarly to the exemplary embodiment described with reference to FIG. 11, each of F1 to F6 may be configured as an offset. For example, Fn may be configured as an offset with respect to Fn-1. Here, n may be a natural number greater than or equal to 2.

Alternatively, the offset of each of F2 to F6 may be configured with respect to F1. Each of F1 to F6 may be represented by a frequency resource index (e.g., subcarrier index, RB index, or sub-channel index). The base station may transmit configuration information including one or more information elements defined in Table 7 below using at least one of system information, RRC message, MAC CE, or control information. This operation may be performed in step S701, before step S701, or after step S701.

**[Table 7]**

| | **Information elements** |
|---|---|
| Configuration information of sensing window #1 | F5, F6, and/or the size of [F6-F5] |
| Configuration information of sensing window #2 | F3, F4, and/or the size of [F4-F3] |
| Configuration information of sensing window #3 | F1, F2, and/or the size of [F2-F1] |

The sensing windows #1 to #3 may be configured by a combination of the exemplary embodiment shown in FIG. 12 and the exemplary embodiment shown in FIG. 10. In this case, the sensing window #1 may be configured with time resources from T5 to T6 and frequency resources from F5 to F6, the sensing window #2 may be configured with time resources from T3 to T4 and frequency resources from F3 to F4, and the sensing window #3 may be configured with time resources from T1 to T2 and frequency resources from F1 to F2

Referring again to FIG. 7, in step S703, the transmitting terminal may determine a resource selection region based on Table 8 below.

**[Table 8]**

| **Congestion state** | **Sensing window** | **Period** |
|---|---|---|
| Congestion level 1 | Sensing window #1 | Period #1 |
| Congestion level 2 | Sensing window #2 | Period #2 |
| Congestion level 3 | Sensing window #3 | Period #3 |

If the congestion state determined in S702 is a congestion level 1, the transmitting terminal may select the sensing window #1 (e.g., sensing window #1 shown in FIGS. 9 to 12). In addition, the transmitting terminal may select a period #1 associated with the sensing window #1. The sensing window #1 may be configured according to the period #1. If the congestion state determined in S702 is a congestion level 2, the transmitting terminal may select the sensing window #2 (e.g., sensing window #2 shown in FIGS. 9 to 12). In addition, the transmitting terminal may select a period #2 associated with the sensing window #2. If the congestion state determined in S702 is a congestion level 3, the transmitting terminal may select the sensing window #3 (e.g., sensing window #3 shown in FIGS. 9 to 12). In addition, the transmitting terminal may select a period #31 associated with the sensing window #3.

The mapping relationship defined in Table 8 (e.g., mapping relationship between congestion levels and sensing windows, mapping relationship between congestion levels and periods, mapping relationship between sensing windows and periods, and/or mapping relationship between congestion levels and combinations of sensing window & period) may be configured in advance. For example, the base station may transmit information of the above-described mapping relationship(s) using at least one of system information, an RRC message, a MAC CE, or control information. The transmitting terminal and/or the receiving terminal may identify the information of the mapping relationship(s) based on the information received from the base station. The information of the mapping relationship(s) may be transmitted in step S701, before step S701, or after step S701. Alternatively, information of the mapping relationship(s) may be predefined in technical specifications.

A plurality of congestion levels may be configured based on specific threshold(s). The degree of congestion (e.g., congestion level) may decrease in the order of (congestion level 1 → congestion level 2 → congestion level 3). For example, the congestion level 1 may mean the most congested state. In the exemplary embodiment shown in FIG. 8, when it is determined that 6 or more measurement regions among 9 measurement regions are congested (e.g., when the degree of congestion is 66% or more), the transmitting terminal may determine that the congestion state is the congestion level 1. When it is determined that less than 3 measurement regions among the 9 measurement regions are congested (e.g., when the degree of congestion is less than 33%), the transmitting terminal may determine that the congestion state is the congestion level 3. In case when '33% ≤ degree of congestion < 66%', the transmitting terminal may determine that the congestion state is the congestion level 2. The value(s) used to distinguish congestion levels (e.g., 'congestion level = 33%', 'congestion level = 66%', and/or the like) may be referred to as reference value(s).

The size of the sensing window may decrease in the order of (sensing window #1 → sensing window #2 → sensing window #3). For example, among the sensing windows, the sensing window #1 may have the largest size. As the degree of congestion increases, a sensing window having a large size may be allocated, and according to this operation, a probability of resource selection collision between transmitting terminals may be reduced. As the degree of congestion is lower, a sensing window having a smaller size may be allocated, and according to this operation, the efficiency of resource use may be improved.

Alternatively, measurement region(s) with a low degree of congestion among the measurement regions shown in FIG. 8 may be configure as the sensing window #1, measurement region(s) with a high degree of congestion among the measurement regions shown in FIG. 8 may be configured as the sensing window #3, and the remaining measurement region(s) not configured as the sensing windows #1 and #3 among the measurement regions shown in FIG. 8 may be configured as the sensing window #2. In this case, based on Table 8, in the case of the congestion level 1, the sensing window #1 (e.g., measurement region(s) having a low degree of congestion) may be used, and in the case of the congestion level 3, the sensing window #3 (e.g., measurement region(s) with a high degree of congestion) may be used.

Referring to Table 8, a sensing window may be periodically configured according to a period. The sensing window #1 may be repeatedly configured according to the period #1, the sensing window #2 may be repeatedly configured according to the period #2, and the sensing window #3 may be repeatedly configured according to the period #3. The period may increase in the order of (period #1 → period #2 → period #3). For avoiding and/or distributing congestion, the period may be configured to be long.

Meanwhile, the transmitting terminal may perform a sensing operation (e.g., a partial sensing operation or a full sensing operation) within the sensing window determined in S703 (S704). In S704, the sensing operation may be performed according to the period defined in Table 8. The transmitting terminal may perform sidelink transmission (e.g., SCI and/or data transmission) based on a result of the sensing operation (S705). The receiving terminal may receive SCI and/or data from the transmitting terminal.

### - Method 2: Method for determining a sensing window based on a data type

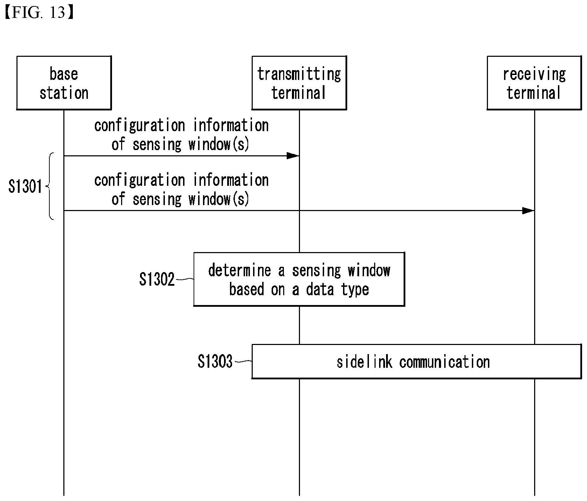

FIG. 13 is a sequence chart illustrating a first exemplary embodiment of a method of determining a sensing window based on a data type.

As shown in FIG. 13, a communication system may include a base station, a transmitting terminal, and a receiving terminal. The base station may be the base station 210 or the relay 220 shown in FIG. 2, the transmitting terminal may be the UE 235 shown in FIG. 2, and the receiving terminal may be the UE 236 shown in FIG. 2. Each of the base station, the transmitting terminal, and the receiving terminal may be configured identically or similarly to the communication node 300 shown in FIG. 3. Each of the transmitting terminal and the receiving terminal may support the protocol stacks shown in FIGS. 4 to 6.

The base station may configure sensing window(s). The sensing window(s) may be the sensing window(s) shown in FIGS. 9 to 12. The base station may transmit configuration information of the sensing window(s) using at least one of system information, RRC message, MAC CE, or control information (S1301). The transmitting terminal and/or the receiving terminal may receive the configuration information from the base station, and may identify the sensing window(s) based on the configuration information. The configuration information of the sensing window(s) may include one or more information elements defined in Tables 4 to 7.

The transmitting terminal may determine a sensing window based on a data type (S 1302). The size of the sensing window may vary depending on the data type. The data type may be classified into periodic data and aperiodic data. In step S1302, the transmitting terminal may determine a sensing window based on Table 9 below.

**[Table 9]**

| **Data type** | **Sensing window** | **Period** |
|---|---|---|
| Period data #1 | Sensing window #1 | Period #1 |
| Period data #2 | Sensing window #2 | Period #2 |
| Aperiodic data | Sensing window #3 | Period #3 |

The characteristics and/or transmission requirements (e.g., period, delay, priority) of periodic data #1 may differ from the characteristics and/or transmission requirements of periodic data #2. A sensing window of aperiodic data may be configured to be smaller than a sensing window of periodic data. In addition, a period of aperiodic data may be configured to be shorter than a period of periodic data. According to the above configuration, a sensing operation for aperiodic data may be quickly performed. The sensing windows #1 to #3 in Table 9 may be the sensing windows #1 to #3 shown in FIGS. 9 to 12. The size of the sensing window may decrease in the order of (sensing window #1 → sensing window #2 → sensing window #3).

The base station may configure a mapping relationship defined in Table 9 (e.g., mapping relationship between data types and sensing windows, mapping relationship between data types and periods, mapping relationship between sensing windows and periods, and/or mapping relationship between data types and combinations of sensing window & period). The base station may transmit configuration information of the above-described mapping relationship(s) using at least one of system information, RRC message, MAC CE, or control information. The transmitting terminal and/or the receiving terminal may identify the mapping relationship(s) (e.g., mapping relationship(s) defined in Table 9) based on the information received from the base station. The information of the mapping relationship(s) may be transmitted in step S1301, before step S1301, and/or after step S1301. Alternatively, the mapping relationship(s) described above may be defined in technical specifications. In this case, a signaling operation of the information of the mapping relationship(s) may be omitted.

When the type of data to be transmitted by the transmitting terminal is periodic data #1, the transmitting terminal may select the sensing window #1 and/or the period #1, and perform a sensing operation according to the sensing window #1 and/or the period #1. The transmitting terminal may perform sidelink communication (e.g., transmission of periodic data #1) based on a result of the sensing operation (S1303). When the sensing window #1 having the largest size is used, collisions between transmitting terminals may be minimized. When the type of data to be transmitted by the transmitting terminal is periodic data #2, the transmitting terminal may select the sensing window #2 and/or the period #2, and may perform a sensing operation according to the sensing window #2 and/or the period #2. The transmitting terminal may perform sidelink communication (e.g., transmission of periodic data #2) based on a result of the sensing operation (S1303).

When the data type to be transmitted by the transmitting terminal is aperiodic data, the transmitting terminal may select the sensing window #3 and/or the period #3, and may perform a sensing operation according to the sensing window #3 and/or the period #3. The transmitting terminal may perform sidelink communication (e.g., transmission of aperiodic data) based on a result of the sensing operation (S1303). When the sensing window #3 having the smallest size is used, resource usage efficiency may be improved, but collisions between transmitting terminals may increase.

In step S1303, the sensing operation may be performed within the sensing window according to the period. When a start time and/or start location of the sensing operation is triggered, the transmitting terminal may perform the sensing operation within the sensing window. By performing the sensing operation, the transmitting terminal may identify an available resource region, select resources within the available resource region, and perform sidelink communication using the selected resources. When an available resource region is identified, the transmitting terminal may not perform a sensing operation in the next sensing window according to the period. Alternatively, the transmitting terminal may periodically perform sensing operations within sensing windows according to the period for continuous data transmission.

A region in which resources are selected after the sensing window may be defined as a selection window. Periodical configuration of the sensing window may mean configuring a selection window between periodic sensing windows. The transmitting terminal may select resources within the selection window (e.g., available resource region) and perform sidelink communication using the selected resources.

### - Method 3: Method for determining a sensing window based on a retransmission state

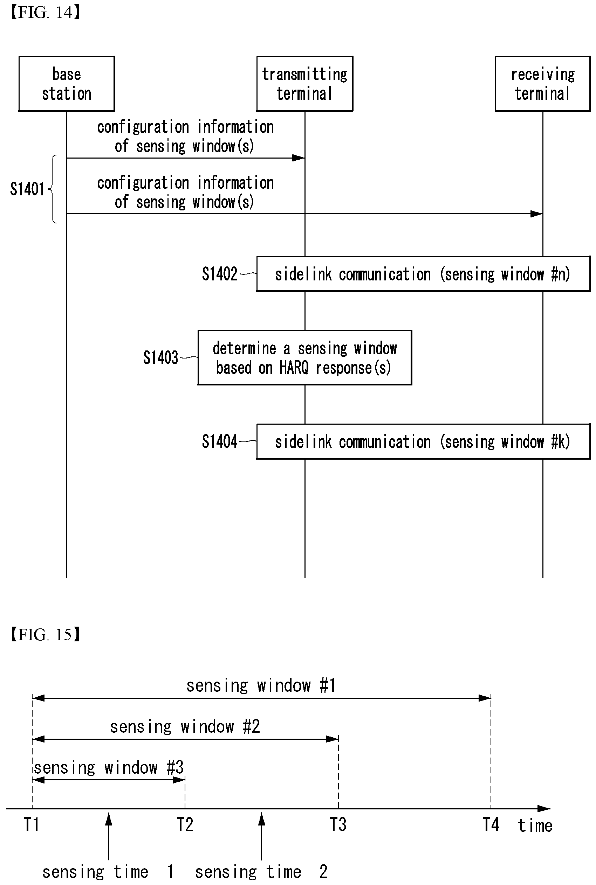

FIG. 14 is a sequence chart illustrating a first exemplary embodiment of a method of determining a sensing window based on a retransmission state.

As shown in FIG. 14, a communication system may include a base station, a transmitting terminal, and a receiving terminal. The base station may be the base station 210 or the relay 220 shown in FIG. 2, the transmitting terminal may be the UE 235 shown in FIG. 2, and the receiving terminal may be the UE 236 shown in FIG. 2. Each of the base station, the transmitting terminal, and the receiving terminal may be configured identically or similarly to the communication node 300 shown in FIG. 3. Each of the transmitting terminal and the receiving terminal may support the protocol stacks shown in FIGS. 4 to 6.

The base station may configure sensing window(s). The sensing window(s) may be the sensing window(s) shown in FIGS. 9 to 12. The base station may transmit configuration information of the sensing window(s) using at least one of system information, RRC message, MAC CE, or control information (S1401). The transmitting terminal and/or the receiving terminal may receive the configuration information from the base station, and may identify the sensing window(s) based on the configuration information. The configuration information of the sensing window(s) may include one or more information elements defined in Tables 4 to 7.

The transmitting terminal may perform a sensing operation in a sensing window #n, and may perform sidelink communication with the receiving terminal based on a result of the sensing operation (S1402). n may be a natural number, and the sensing window #n may be one of the sensing windows #1 to #3 shown in FIGS. 9 to 12. In step S1402, the sidelink communication may be performed based on a broadcast scheme, a multicast scheme, a groupcast scheme, or a unicast scheme. In step S1402, the receiving terminal may transmit a hybrid automatic repeat request (HARQ) response (e.g., acknowledgment (ACK) or negative ACK (NACK)) for data to the transmitting terminal.

The transmitting terminal may determine (e.g., change) the sensing window based on the HARQ response(s) received from the receiving terminal (S1403). The size of the sensing window may be adjusted based on the HARQ response(s). In step S1403, the transmitting terminal may determine a sensing window based on Table 10 below. When the NACK-only scheme is used, `no NACK' may be interpreted as ACK. That is, in Table 10 below, ACK may mean `no NACK'.

**[Table 10]**

| **HARQ responses** | **Sensing window #n in step S1402** | **Sensing window #k in step S1404** |
|---|---|---|
| p consecutive ACKs | Sensing window #1, period #1 | Sensing window #2, period #2 |
| | Sensing window #2, period #2 | Sensing window #3, period #3 |
| | Sensing window #3, period #3 | Sensing window #3, period #3 |
| k consecutive NACKs | Sensing window #3, period #3 | Sensing window #2, period #2 |
| | Sensing window #2, period #2 | Sensing window #1, period #1 |
| | Sensing window #1, period #1 | Sensing window #1, period #1 |

In Table 10, each of p, j, n, and k may be a natural number. The size of the sensing window may decrease in the order of (sensing window #1 → sensing window #2 → sensing window #3). The period may decrease in the order of (period #1 → period #2 → period #3). Alternatively, the period may increase in the order of (period #1 → period #2 → period #3). The base station may configure the mapping relationship(s) defined in Table 10 (e.g., mapping relationship between HARQ responses and sensing windows, mapping relationship between HARQ responses and periods, mapping relationship between sensing windows and periods, and/or mapping relationship between HARQ responses and combinations of sensing window & period). The base station may transmit information of the mapping relationship(s) using at least one of system information, RRC message, MAC CE, or control information. The information of the mapping relationship(s) may include a value of p and a value of j set by the base station. p may be configured to be equal to j. Alternatively, p may be configured to be different from j.

The transmitting terminal and/or the receiving terminal may identify the information of the mapping relationship(s) defined in Table 10 based on the information received from the base station. The information of the mapping relationship(s) may be transmitted in step S1401, before step S1401, and/or after step S1402. Alternatively, the mapping relationship(s) described above may be defined in technical specifications. In this case, a signaling operation of the information of the mapping relationship(s) may be omitted.

When p consecutive ACKs (e.g., 2 consecutive ACKs or 2 consecutive no NACKs) are received from the receiving terminal in step S1402, the transmitting terminal may change the sensing window to a sensing window having a smaller size. In addition, the transmitting terminal may select a period associated with the changed sensing window. The occurrence of consecutive ACKs or the occurrence of consecutive no NACKs may mean no collision between transmitting terminals. In this case, a degree of congestion or occupancy of the sensing window #n used in step S1402 may be estimated to be low. Accordingly, the transmitting terminal may improve resource efficiency by using the sensing window having a smaller size. When the sensing window #1 and/or period #1 is used and p consecutive ACKs are received in step S1402, the transmitting terminal may change the sensing window and/or period from the sensing window #1 and/or period #1 to the sensing window #2 and/or period # 2, perform a sensing operation within the sensing window #2 (e.g., sensing window #2 according to period #2) in step S1404, and perform sidelink communication based on a result of the sensing operation. When the sensing window #3 and/or period #3 is used and p consecutive ACKs are received in step S1402, since there is no sensing window smaller than the sensing window #3, the transmitting terminal may maintain the sensing window #3. In addition, the period #3 may also be maintained. Accordingly, the transmitting terminal may perform a sensing operation within the sensing window #3 (e.g., sensing window #3 according to period #3) in step S1404, and may perform sidelink communication based on a result of the sensing operation.

The occurrence of consecutive NACKs may mean occurrence of a collision between transmitting terminals. In this case, a degree of congestion or occupancy of the sensing window #n used in step S1402 may be estimated to be high. Accordingly, the transmitting terminal may reduce the number of retransmissions by using the sensing window having a larger size. When the sensing window #3 and/or period #3 is used and j consecutive NACKs are received n step S1402, the transmitting terminal may change the sensing window and/or period from the sensing window #3 and/or period #3 to the sensing window #2 and/or period # 2, perform a sensing operation within the sensing window #2 (e.g., sensing window #2 according to period #2) in step S1404, and may perform sidelink communication based on a result of the sensing operation. When the sensing window #1 and/or period #1 is used and p consecutive NACKs are received in S1402, since there is no sensing window larger than the sensing window #1, the transmitting terminal may maintain the sensing window # 1. In addition, the period #1 may also be maintained. Accordingly, the transmitting terminal may perform a sensing operation within the sensing window #1 (e.g., sensing window #1 according to period #1) in step S1404, and may perform sidelink communication based on a result of the sensing operation.

### - Method 4: Method of changing a sensing window for fast data transmission

The transmitting terminal may perform a sensing operation within the sensing window, select an available resource after the sensing window, and perform sidelink communication using the selected resource. Even when an available resource is detected before an end time of the sensing window and fast sidelink communication using the detected resource is required, the transmitting terminal may not be able to perform sidelink communication until the end time of the sensing window. In order to solve the above-mentioned problem, when an available resource is detected before the end time of the sensing window and fast sidelink communication using the detected resource is required, the transmitting terminal may change the sensing window.

FIG. 15 is a conceptual diagram illustrating a first exemplary embodiment of a method of changing a sensing window.

As shown in FIG. 15, an initial sensing window for the transmitting terminal may be configured (e.g., allocated) as the sensing window #1. Configuration information of the sensing windows #1 to #3 may be transmitted from the base station to the transmitting terminal. The transmitting terminal may perform a sensing operation within the sensing window #1. In this case, when an available resource is detected at a sensing time 1 (e.g., when the available resource detected by the sensing operation is before an end time of the sensing window #3), the transmitting terminal may change the sensing window #1 to the sensing window #3, and may stop the sensing operation at the end time (e.g., T2) of the sensing window #3. In this case, the transmitting terminal may perform sidelink communication after T2.

For another example, when an available resource is detected at a sensing time 2 (e.g., when the available resource detected by the sensing operation is before an end time of the sensing window #2), the transmitting terminal may change the sensing window from the sensing window #1 to the sensing window #2, and may stop the sensing operation at the end time (e.g., T3) of the sensing window #2. In this case, the transmitting terminal may perform sidelink communication after T3. According to the above-described exemplary embodiments, the transmitting terminal may perform sidelink communication without waiting until an end point (e.g., T4) of the initial sensing window (e.g., sensing window #1).

The operation of changing the sensing window may be performed based on triggering condition(s) configured by the base station. The triggering condition(s) may be one or more conditions defined in Table 11 below. The transmitting terminal may change the sensing window when one or more conditions defined in Table 11 below are satisfied. That is, the transmitting terminal may change the sensing window when (re)transmission of data defined in Table 11 below is required. The base station may transmit configuration information of the triggering condition(s) to the transmitting terminal using at least one of system information, RRC message, MAC CE, or control information.

**[Table 11]**

| | **Description** |
|---|---|
| Condition 1 | Transmission of data having a higher priority |
| Condition 2 | Transmission according to a cast type having a higher priority |
| Condition 3 | Transmission of public safety data |
| Condition 4 | Transmission of aperiodic data |
| Condition 5 | Retransmission of data |
| Condition 6 | Transmission of data that has not been transmitted due to pre-emption |
| Condition 7 | Transmission of data in a reselected resource, when a channel state of a selected resource is not good |

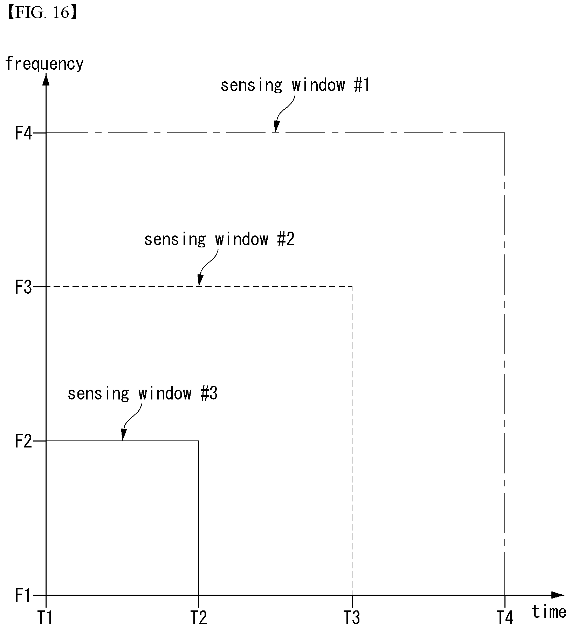

FIG. 16 is a conceptual diagram illustrating a second exemplary embodiment of a method of changing a sensing window.

As shown in FIG. 16, sensing windows #1 to #3 may be configured by a combination of the exemplary embodiment shown in FIG. 9 and the exemplary embodiment shown in FIG. 11. In this case, the sensing window #1 may be configured with time resources from T1 to T4 and frequency resources from F1 to F4, the sensing window #2 may be configured with time resources from T1 to T3 and frequency resources from F1 to F3, and the sensing window #3 may be configured with time resources from T1 to T2 and frequency resources from F1 to F2.

An initial sensing window for the transmitting terminal may be configured (e.g., allocated) as the sensing window #1. Configuration information of the sensing windows #1 to #3 may be transmitted from the base station to the transmitting terminal. The transmitting terminal may perform a sensing operation within the sensing window #1. In this case, when an available resource is detected between T1 and T2, the transmitting terminal may change the time resources of the sensing window #1 to time resources from T1 to T2. The frequency resources of the sensing window #1 may be maintained as they are. Alternatively, the frequency resources of the sensing window #1 may be changed to frequency resources from F1 to F2. The transmitting terminal may stop performing the sensing operation at T2 and may perform sidelink communication after T2. Alternatively, the transmitting terminal may perform sidelink communication in a resource region composed of time resources from T1 to T2 and frequency resources from F 1 to F4.

In the procedure of changing the sensing window, time resources of the sensing window, frequency resources of the sensing window, or time resources and frequency resources of the sensing window may be changed. The operation of changing the sensing window may be performed based on triggering condition(s) configured by the base station. The triggering condition(s) may be one or more conditions defined in Table 11 above. The transmitting terminal may change the sensing window when one or more conditions defined in Table 11 are satisfied. That is, the transmitting terminal may change the sensing window when (re)transmission of data defined in Table 11 is required. The base station may transmit configuration information of the triggering condition(s) to the transmitting terminal using at least one of system information, RRC message, MAC CE, or control information.

The method for changing a sensing window illustrated in FIGS. 15 and/or 16 may be applied to each of the exemplary embodiment shown in FIG. 7, the exemplary embodiment shown in FIG. 13, and the exemplary embodiment shown in FIG. 14. A selection window may be configured after the sensing window shown in FIGS. 15 and 16. The selection window may be configured in association with the sensing window. The selection window may be configured in a manner identical or similar to that for the sensing window. The selection window may be associated with the changed sensing window according to the exemplary embodiment shown in FIG. 15 or FIG. 16. When the sensing window is changed, the selection window associated with the corresponding sensing window may also be changed. Alternatively, regardless of the change of the sensing window, the selection window may be operated independently.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions and alterations may be made herein without departing from the scope of the present disclosure.

## Claims

1. An operation method of a transmitting terminal in a communication system, the operation method comprising:
identifying a congestion level in one or more measurement regions;
selecting a first sensing window from among a plurality of sensing windows, when the congestion level is greater than or equal to a first reference value;
performing a sensing operation within the first sensing window; and
performing sidelink communication with a receiving terminal based on a result of the sensing operation,
wherein a size of the first sensing window is different from a size of a second sensing window which is selected from among the plurality of sensing windows when the congestion level is less than the first reference value.

2. The operation method according to claim 1, further comprising:
receiving, from a base station, a message including mapping relationship information between congestion levels and the plurality of sensing windows, wherein each of the first sensing window and the second sensing window is selected based on the mapping relationship information.

3. The operation method according to claim 2, wherein the message further includes: mapping relationship information between congestion levels and a plurality of periods, wherein the plurality of periods are associated with the plurality of sensing windows.

4. The operation method according to claim 3, further comprising:
selecting a first period associated with the first sensing window from among the plurality of periods, wherein the sensing operation is performed within the first sensing window according to the first period.

5. The operation method according to claim 1, wherein the congestion level is determined based on a ratio between the one or more measurement regions and at least one measurement region determined to be congested among the one or more measurement regions.

6. The operation method according to claim 1, wherein a degree of congestion of a congestion level equal to or greater than the first reference value is higher than a degree of congestion of the congestion level less than the first reference value, and the size of the first sensing window is larger than the size of the second sensing window.

7. The operation method according to claim 1, further comprising:
receiving, from a base station, configuration information of the one or more measurement regions and configuration information of the plurality of sensing windows.

8. The operation method according to claim 7, wherein when start times of the plurality of sensing windows are same, the configuration information of the plurality of sensing windows includes information on a common start time and information on individual end times.

9. The operation method according to claim 1, further comprising, when an available resource detected by the sensing operation is located before an end time of a third sensing window among the plurality of sensing windows, changing the first sensing window to the third sensing window, wherein a size of the third sensing window is smaller than the size of the first sensing window.

10. The operation method according to claim 9, wherein the changing the first sensing window to the third sensing window is performed when a preconfigured condition is satisfied, and the preconfigured condition is at least one of a case when data transmission associated with a high priority is required, a case when aperiodic data transmission is required, a case when data retransmission is required, or combinations thereof.

11. An operation method of a transmitting terminal in a communication system, the operation method comprising:
performing a first sidelink communication procedure with a receiving terminal based on a result of a sensing operation within a sensing window #n among a plurality of sensing windows;
changing a sensing window from the sensing window #n to a sensing window #k based on one or more hybrid automatic repeat request (HARQ) responses received in the first sidelink communication procedure; and
performing a second sidelink communication procedure with the receiving terminal based on a result of a sensing operation within the sensing window #k among the plurality of sensing windows,
wherein a size of the sensing window #n is different from a size of the sensing window #k, and each of n and k is a natural number.

12. The operation method according to claim 11, wherein when the one or more HARQ responses are p consecutive acknowledgments (ACKs), a sensing window used for the second sidelink communication procedure is determined as the sensing window #k smaller than the sensing window #n, and p is a natural number.

13. The operation method according to claim 11, wherein when the one or more HARQ responses are j consecutive negative ACKs (NACKs), a sensing window used for the second sidelink communication procedure is determined as the sensing window #k greater than the sensing window #n, and the j is a natural number.

14. The operation method according to claim 11, further comprising: receiving, from a base station, a message including mapping relationship information between the one or more HARQ responses and the plurality of sensing windows, wherein the sensing window #k is determined based on the mapping relationship information.

15. The operation method according to claim 14, wherein the message further includes mapping relationship information between the one or more HARQ responses and a plurality of periods, the plurality of periods are associated with the plurality of sensing windows, and the sensing window #k is configured according to a period #k among the plurality of periods.

16. An operation method of a transmitting terminal in a communication system, the operation method comprising:
selecting a first sensing window mapped to a first data type from among a plurality of sensing windows;
performing a sensing operation within the first sensing window; and
transmitting data having the first data type to a receiving terminal based on a result of the sensing operation,
wherein a size of the first sensing window is different from a size of a second sensing window mapped to a second data type among the plurality of sensing windows.

17. The operation method according to claim 16, further comprising receiving, from a base station, a message including mapping relationship information between a plurality of data types including the first data type and the second data type and the plurality of sensing windows, wherein the first sensing window is determined based on the mapping relationship information.

18. The operation method according to claim 17, wherein the message further includes mapping relationship information between the plurality of data types and a plurality of periods, the plurality of periods are associated with the plurality of sensing windows, and the sensing operation is performed within the first sensing window according to a first period among the plurality of periods.

19. The operation method according to claim 16, wherein when the first data type is periodic data, the second data type is aperiodic data, and when the first data type is aperiodic data, the second data type is periodic data.

20. The operation method according to claim 16, further comprising, when an available resource detected by the sensing operation is located before an end time of a third sensing window among the plurality of sensing windows, changing the first sensing window to the third sensing window, wherein a size of the third sensing window is smaller than the size of the first sensing window.
